**Europäisches Patentamt**

**European Patent Office**

**Office européen des brevets**

(19)

(11) Veröffentlichungsnummer: **0 207 222**
**A2**

(12) # EUROPÄISCHE PATENTANMELDUNG

(21) Anmeldenummer: **86103466.8**

(22) Anmeldetag: **14.03.86**

(51) Int.Cl.⁴: **C 05 C 1/02**

(30) Priorität: **04.06.85 DE 3519920**

(43) Veröffentlichungstag der Anmeldung:
**07.01.87 Patentblatt 87/2**

(84) Benannte Vertragsstaaten:
**AT DE FR GB IT NL SE**

(71) Anmelder: **Uhde GmbH**
**Friedrich-Uhde-Strasse 15 Postfach 262**
**D-4600 Dortmund 1(DE)**

(72) Erfinder: **Nebel, Robert, Dipl.-Ing.**
**Brandenburger Strasse 16**
**D-5860 Iserlohn 9(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) Verfahren zur Herstellung von granuliertem Ammonnitrat.

(57) Bei einem Verfahren zur Herstellung von granuliertem Ammonnitrat mit einem Stickstoffgehalt von 28 bis 35 %, insbesondere von Düngemittelgranulat soll eine Lösung geschaffen werden, mit der in einer Granulieranlage, die mit einem Schneckengranulator ausgerüstet ist, ein granuliertes Ammonnitrat herstellbar ist, welches sowohl den neuesten Richtlinien des EG-Ministerrates (Amtsblatt L 250 vom 20.09.1980) entspricht als auch gegen Desintegrationserscheinungen stabilisiert ist, insbesondere eine gute Lagerfähigkeit aufweist.

Dies wird dadurch erreicht, daß wässrige Ammonnitratlösung mit einer Temperatur von 150 bis 170°C in einem vorgelegten Bett eines Schneckengranulator vorgranuliert und anschließend das den Granulator verlassende Rohgranulat in einer Poliertrommel bei 105 – 125°C endgranuliert und verdichtet wird.

EP 0 207 222 A2

"Verfahren zur Herstellung von granuliertem Ammonnitrat"

Die Erfindung richtet sich auf ein Verfahren zur Herstellung von granuliertem Ammonnitrat mit einem Stickstoffgehalt von 28 - 35 %, insbesondere von Düngemittelgranulat.

Düngemittel-Ammonnitrat soll in Kugelform vorliegen, wobei die Körner möglichst dicht sein sollen und ein Spektrum von 1 - 4 mm aufweisen sollten. Die Überführung eines derartigen Ammonnitrates in handelsfähiger Form mit einem Stickstoffgehalt von bis zu 33,5% geschieht heute üblicherweise nach dem Prill-Verfahren. Nachteilig dabei ist, daß eine praktisch wasserfreie Schmelze mit einer Konzentration von ca. 99,7 % eingesetzt werden muß, um Prills mit einer akzeptablen Härte und geringer Porösität zu erhalten. Um die Prills gegen die bekannten Desintegrationserscheinungen zu stabilisieren, werden Zusätze, wie Magnesiumnitrat, Alkaliumnitrat, Aluminiumsulfat und dgl. zugesetzt.

Aus der DE-PS 30 08 891 ist ein Verfahren zur Herstellung von stabilisierten, Ammoniumnitrat enthaltenden Körnern bekannt. Bei diesem bekannten Verfahren wird versucht, die Qualität der erhaltenen Körner dadurch zu verbessern, daß eine mindestens 80 Gew.-% Ammoniumnitrat enthaltende Lösung oder Suspension über in Bewegung und voneinander in getrenntem Zustand gehaltene Feststoffteilchen gesprüht und mit einem heißen Gasstrom getrocknet wird, wobei die Temperatur der besprühten Feststoffteilchen zwischen 120 und 135°C aufrechterhalten wird. Die Abkühlung der Körner soll bei diesem bekannten Verfahren möglichst langsam sein. Bei diesem bekannten Verfahren werden die Ammonniumnitrat enthaltenden Körner in einer Stufe gebildet und getrocknet.

Aus einer Beilage zu "Phosphorus and Potassium" März/April 1985, London, sind eine Reihe von Behandungsmöglichkeiten zum Granulieren, insbesondere auch dazu herangezogene Vorrichtungen, bekannt, so Schneckengranulatoren oder Wirbelschichtgranulatoren.

Aufgabe der Erfindung ist die Schaffung einer Lösung, mit der in einer Granulieranlage die mit einem Schneckengranulator ausgerüstet ist, ein granuliertes Ammonnitrat herstellbar ist, welches sowohl den neuesten Richtlinien des EG-Ministerrates (Amtsblatt L 250 vom 20.09.1980) entspricht als auch gegen Desintegrationserscheinungen stabilisiert ist, insbesondere eine gute Lagerfähigkeit aufweist.

Mit einem Verfahren der eingangs bezeichneten Art wird diese Aufgabe gemäß der Erfindung dadurch gelöst, daß wässrige Ammonnitratlösung mit einer Temperatur von 150 - 170°C in einem vorgelegten Bett eines Schneckengranulators vorgranuliert und anschließend das den Schneckengranulator verlassende Rohgranulat aus dem Schneckengranulator in einer Poliertrommel bei 105 - 125°C endgranuliert und verdichtet wird.

Es hat sich gezeigt, daß die Erzeugung von dichten, harten und temperaturwechselbeständigen Granalien mit der Erfindung dadurch möglich wird, daß die Granulation zweistufig erfolgt und zwar zunächst auf einem vorgelegten Bett, das praktisch als Granulierhilfe dient, in einer Granulierschnecke und nachfolgend in einer Poliertrommel.

Durch diese Granulierhilfen wird der Anteil an flüssiger Phase im Bereich der Granulierzone erhöht. Die Verfestigung der untergemischten heißen Granulatschmelze erfolgt damit verzögert.

Diese Verzögerung wiederum ermöglicht die endgültige Formgebung und Verdichtung der Granalien in einer Poliertrommel gemäß der Erfindung, da sich die Granalien bei Übergang von dem Schneckengranulator in die Poliertrommel noch in einem plastischen Zustand befinden. Die Trocknung, die Aussiebung, die Zerkleinerung der zu groben Granalien und die Rückführung des zerkleinerten, ausgesiebten Feinanteiles in den Schneckengranulator erfolgt auf konventionellem Weg.

In Ausgestaltung sieht die Erfindung vor, daß eine wässrige Ammonnitratlösung mit einer Konzentration von mindestens 96 % eingesetzt wird, wobei insbesondere vorgesehen sein kann, daß die Temperatur des Granulates in der Poliertrommel durch Überleiten von 50 bis zu 130 $^{o}$C heißer Luft gehalten wird.

Wie bereits weiter oben erwähnt, ist es bekannt (DE-PS 30 08 891) und kann es sinnvoll sein, der Schmelze Additive hinzuzufügen. Hierzu sieht die Erfindung vor, daß neben der Ammonitratschmelze im Schneckengranulator 0,3 - 1,5 Gew. % $Mg(NO_3)_2$ und/oder 0,1 - 1,5 Gew. % $Al_2(SO_4)_3$ zugegeben werden.

Um den pH-Wert auf einer vorbestimmbaren Größe zu halten, sieht die Erfindung vor, daß dies durch Zugabe von Ammoniak erfolgt, wobei der pH-Wert hierbei auf 5 - 7 gehalten wird.

Die Erfindung sieht auch vor, daß dem Schneckengranulator bis zu 20 % Füllstoff, wie Kalkstein od. dgl. zugeführt werden, wobei in weiterer Ausgestaltung vorgesehen ist, daß der Staub einem direkt über dem Schneckengranulator angeordneten Zyklonmischer zugeführt wird, wobei dem Zyklonmischer auch die ggf. einzusetzenden Füllstoffe aufgegeben werden.

Die Erfindung ist nachstehend anhand von Beispielen erläutert, ohne daß die Erfindung hierauf beschränkt wäre:

Beispiel 1

Eine Ammonnitratschmelze mit einer Konzentration von 97 %, einer Temperatur von 160 $^{o}$C und ohne jeden Zusatz von Granulierhilfsmitteln wurde mit ca. 75$^{o}$C warmen Rückgut und Kalksteinmehl in eine Granulierschnecke und anschließend in eine Poliertrommel gegeben. Die erzeugten Düngemittelgranalien hatten 33,5 % N, 0,4 % $H_2O$ und einen pH-Wert von 6,5. Die Härte betrug 3 kg und die Ölretention lag über 4 %.

Beispiel 2

Eine Ammonnitratschmelze mit einer Konzentration von 96 %, die 0,32 % MgO in Form von Magnesiumnitrat enthielt und eine Temperatur von 156$^{o}$C aufwies, wurde in einer Granulierschnecke, der 80$^{o}$C warmes Rückgut und ca. 35$^{o}$C warmes Kalksteinmehl zugegeben wurde und nachfolgend in einer Poliertrommel zu Düngemittelgranalien verarbeitet, die 33 % N, 0,4 % $H_2O$ und einen pH-Wert von 7,5. Die Härte betrug 4,2 kg und die Ölretention 3 %.

Beispiel 3

In der gleichen Granulieranlage wurden weitere Tests gefahren, indem der Ammonnitratschmelze 0,5 bis 1,2 % Mg $(NO_3)_2$ zugemischt und zusätzlich in den Schneckengranulator 0,3 bis 0,1 % $Al_2(SO_4)_3$ wurden. Das Produkt hatte 33,5 % N und einen pH-Wert von 7,3 und es bestand den Detonationstest.

Beispiel 4

In einer Granulierschnecke und einer Poliertrommel wurden Düngemittelgranalien erzeugt, indem der Granulierschnecke eine Ammonnitratschmelze mit einer Konzentration von 95 % und einer Temperatur von 160° aufgegeben wurde. Als Granulierhilfe wurde handelsübliches Aluminiumsulfat (1 % bezogen auf das Fertigprodukt) eingesetzt. Das Produkt hatte 33,5 % N, 0,25 % $H_2O$ und einen pH-Wert von 7,5. Die Härte betrug 4,5 kg und die Ölretention 2 %. Das Produkt bestand den Detonationstest.

Patentansprüche:

1.  Verfahren zur Herstellung von granuliertem Ammonnitrat mit
    einem Stickstoffgehalt von 28 bis 35 %,

    dadurch gekennzeichnet,

    daß wässrige Ammonnitratlösung mit einer Temperatur von
    150 bis 170 $^\circ$C in einem vorgelegten Bett eines Schneckengranulators vorgranuliert und anschließend das den Granulator verlassende Rohgranulat in einer Poliertrommel bei
    105 - 125 $^\circ$C endgranuliert und verdichtet wird.

2.  Verfahren nach Anspruch 1,

    dadurch gekennzeichnet,

    daß eine wässrige Ammonnitratlösung mit einer Konzentration von mindestens 96 % eingesetzt wird.

3.  Verfahren nach Anspruch 1 oder 2,

    dadurch gekennzeichnet,

    daß die Temperatur des Granulates in der Poliertrommel
    durch Überleiten von 50$^\circ$ bis 130 $^\circ$C heißer Luft gehalten
    wird.

4.  Verfahren nach einem der Ansprüche 1 - 3,

    dadurch gekennzeichnet,

daß neben der Ammonnitratschmelze im Schneckengranulator 0,3 - 1,5 Gew. % $Mg(NO_3)_2$ und/oder 0,1 - 1,5 Gew. %

$Al_2(SO_4)_3$ zugegeben werden.


5. Verfahren nach Anspruch 1 oder einem der folgenden,

dadurch gekennzeichnet,

daß der pH-Wert der Ammonnitratschmelze durch Zugabe von Ammoniak auf 5 - 7 gehalten wird.


6. Verfahren nach einem der vorangehenden Ansprüche,

dadurch gekennzeichnet,

daß dem Schneckengranulator bis zu 20 % Füllstoff, wie Kalkstein od. dgl. zugeführt werden.


7. Verfahren nach einem der vorangehenden Ansprüche mit einer Entstaubung der Abluft,

dadurch gekennzeichnet,

daß der Staub einem direkt über dem Schneckengranulator angeordneten Zyklonmischer zugeführt wird, wobei dem Zyklonmischer auch die ggf. einzusetzenden Füllstoffe aufgegeben

werden.